# EUROPEAN PATENT SPECIFICATION

(11) **EP 2 072 925 B1**
(45) Date of publication and mention of the grant of the patent: **26.06.2019**
(21) Application number: 06791165.1
(22) Date of filing: 29.09.2006
(51) Int. Cl.: F24F 13/00, F24F 7/10, B01L 1/00, B01L 1/04, B01D 46/44, B08B 15/02, B25J 21/02, F24F 3/16, G01N 1/22, G01N 15/08

(54) **SAFE EXHAUST**
SICHERE ABLUFTVORRICHTUNG
SORTIE DE VENTILATION SÉCURISÉE

(30) Priority: 20.09.2006 CN 200610152231
(43) Date of publication of application: 24.06.2009
(73) Proprietor: China Academy of Building Research, Beijing 100013 (CN)
(72) Inventor: XU, Zhonglin, Beijing 100013 (CN); ZHANG, Yizhao, Beijing 100013 (CN); WEN, Feng, Beijing 100013 (CN); SHEN, Jinming, Shanghai 200092 (CN)
(74) Representative: dompatent von Kreisler Selting Werner - Partnerschaft von Patent- und Rechtsanwälten mbB
(86) International application number: PCT/CN2006/002579
(87) International publication number: WO 2008/034300

(56) References cited:
- CN-A- 1 601 192
- CN-Y- 2 270 775
- CN-Y- 2 746 301
- CN-Y- 2 746 301
- CN-Y- 2 796 824
- JP-A- 63 007 820
- JP-A- 63 007 820
- JP-A- 2002 221 464
- JP-A- 2002 221 464
- US-A1- 2006 053 864

## Description

### Technical field

The present invention relates to a ventilating system, and more specially to a safe exhaust adapted for leakless securely exhausting aerosol which would be polluted by the harmful bio-factors.

### Background art

Take the biosafety laboratories for example, <Architectural and Technical Code for Biosafety Laboratories> of Chinese national standard GB50346-2004 requests that the high effective filter is arranged on the exhaust surface of the maintaining construction of biosafety laboratories so as to make the contamination to be defined into minimum range and prevent injurant microorganism from going into system (including pipes and machines) which may enhance the contamination range. Since the high effective filter has great duty to prevent injurant microorganism infiltrating out of the room, it is possible to product incogitable impact once pathogen running over due to leakage.

Therefore, it is necessary to scan leak detection (not fixed point) of the fixed effective exhaust filter in domestic and overseas relative standards or literatures. Since the high effective exhaust filter can be re-fixed after field scanning, the primary leakage source is located on the fixed frame edges. It is not possible to perform scan leak detection, because the device, pipe or wall are in the negative pressure sections of exhaust systems, at most to punch small holes, so as to perform fixed point leak detection, which is not satisfied for the original ideal of scanning. The scanning detection can not be achieved because it must be performed near the exhaust surface of high effective exhaust filter at 1∼2cm distance, which is located within the negative pressure sections of exhaust system.

But relevant measurements can not be obtained even though there are scan leak detection regulations in domestic and overseas standards. The patent devices have been researched after developing the relevant standards, which would solve for suggestions about fixing without leakage and securely-dismounting filter but can not be satisfied the request of scan leak detection for filter at any moment.

The known measurements are expedient, one of which is to provide the high effective exhaust filter in the special exhaust comprising bag in and bag out construction, this device has a special compressing configuration and a push- and-pull rod, when replacing, first cover a plastic bag onto the device, then pushing the rod, the pressing configuration can be relaxed, so the filter falls into the plastic bag, and then tying the plastic bag to process the filter outside. Also when fixing, take the new filter into a plastic bag, and first cover the plastic bag onto the exhaust, and the filter compressing configuration can be compressing after pulling the rod and the filter is fixed well. So prevent maintenance man directly touching the high effective filter. The bag in and bag out device is very special and too big and heavy to be fixed on the exhaust port, so some foreign standards have to allow the exhaust to be arranged at the pipeline middle, therefore, the foreign standards emphasis that it is needed to disinfect the pipeline and assembly during replacing the high effective filter to prevent pathogen into the system (including front side of the pipeline and bag in and bag out device, i.e. contaminated side).

So the disinfection for the pipeline and assembly is present. It is necessary to fix a seal and partition valve and a formaldehyde injection port into the pipeline to avoid the influence of disinfection. Before disinfection, close the seal and partition valve of the pipeline and assembly and inject formaldehyde through the injection port to perform disinfecting, and then discharge the leftover through the exhaust after disinfection.

In order to detect the exhaust regularly to avoid questions due to decreased elasticity and aging of seal band on the surface of high effective filter during long-term operation and since there is great request for leak detection of the high effective filter, a large space is required for person performing leak detection. In order to detecting the leakage of filter at any moment, it is also need to provide a test housing in the exhaust, there are an injection port for testing particle (such as DOP aerosol) at upstream, and a sample port at downstream and a scan test section for scanning detecting the filter. It is very discommodious to operate in the scan test section which makes the exhaust to be long and big, and to change or maintain the assembly in the case of not working of which the scanning device need to be arranged hermetically in the exhaust. If with fixed point leak detection, that is to extend in the sampling head for detecting through small holes at side of the assembly. But it can not reflect whether there is leaking. The leak detection manner with bag in and bag out, since the device is in general arranged at the end of system due to the limited fixed place and cost, which needs all the exhaust pipes in rooms to connect with each other and to centre-process the exhaust which is to make the exhaust pipeline to contain aerosol with pathogen. Meanwhile, the investment for dealing with aerosol and the contaminative range may be increased possibly because there is need to keep negative pressure for environment. Another measurement is to provide an exhaust process housing in the branch the fixed point leak detection and the injection port for disinfector which is more simple than the one of the above mentioned configuration, so that the contaminative pipelines before the exhaust high effective filter may be very short but the fixed leak detection can not be obtained yet.

In the pending patent with Chinese patent number 200410086391.X of the present inventor, it is provided with a high effective dynamic airflow seal negative pressure exhaust assembly of which the high effective filter may be fixed after confirming no-leakage by field scan leak detection, so the device is no leakage, and the scan leak detection is not needed in use. But in some fields, it is required to scan detection for the high effective filter itself to ensure secure reliability against breakage. As described above, the foreign means is to increase the scan test sections only to perform several fixed point detections through detecting rod, which can not reflect the actual status and remains question of small holes.

In addition, CN 2 746 301 Y relates to a safe exhaust comprising exhaust housing (1), exhaust filter (2), whereby the exhaust filter (2) provided with double-face adhesive sealing tape (5,12) on its end surface is placed in the exhaust housing(5,12); a positive pressure cavity is formed between the exhaust housing (1) and the exhaust filter (2), and a positive pressure connector (3) is formed on the exhaust housing, whereby an intake port is connected with the positive pressure connector (3) with an intake rubber pipe (4) so as to communicate with the positive pressure cavity.

JP 63-007820A relates to many dust-proof filters 1 which are regularly fitted to the ceiling of a clean room1. Labelings 5 having high reflectance for inducing an unmanned traveling car 4 are provided to fitting frames at a dust-proof filter unit. The unmanned traveling car 4 is provided with a manipulator sucking air through the specified dust-proof filter by scanning the labelings with a probe 7 fitted to the tip of an arm. A particle instrument measuring the number of dust particles contained in sucked air and a memory device outputting the result thereof to an indicator or a printing device are provided. Therefore in case of feeding an inspection command to the unmanned traveling car 4, the labelings are detected by an accessory image pickup camera and a servomotor is controlled and therefore the air in the prescribed position can be sucked.

JP 2002-221464A is related to a clean booth 1. A filter 3 is provided in a filter housing case 2 which is box-like and comprises an opening at its lower part, and luminaires 5 are provided in the case 2 on the lower stream side of the filter 3. The gas sent by a fan 4 passes the filter 3 and flows among the luminaires 5. An insert opening 16 which allows a scanning device 19 to be inserted into the case 2 is formed on the side wall of the case 2. A fitting means 6 to fit the scanning device 19 inserted into the case 2 between the filter 3 and the luminaires 5 is provided in the case 2.

US 2006/0053864 A1 relates to a filter system having in-situ scan capabilities. In one embodiment of the invention, the system includes a downstream probe which may be rotated to scan the field of a filter installed in the system. The probe may be utilized for leak detection, velocity measurements, efficiency testing and the like. In one embodiment, one or more probes are rotated downstream of the filter to scan the downstream face of the filter.

### Contents of the invention

The object of present invention is to provide a safe exhaust used for biosafety laboratories, negative pressure epidemical rooms, biological product workshop using material of danger factories which cause diseases easily and correlative devices such as biosafety cabinet.

Another object of present invention is to provide a safe exhaust to perform exhausting without leakage.

The further object of present invention is to provide a safe exhaust to perform the non-destructively scan and detection whether leakage of the safe exhaust occurs in which namely it is not necessary to provide detecting small hole.

To achieve the above said objects, the present invention provides a safe exhaust as defined in claim 1.

In the preferable embodiment of the invention, the interior and exterior scanning guide plates is provided with colubrine guide rail on which the interior and exterior magnets move together, so that the interior and exterior magnets can be inserted into the guide without falling off.

In the preferable embodiment of the invention, a case is placed on that side of the exhaust housing which is opposite the scanning device and provided with a small hole for DOP and formaldehyde generators to perform discharging fog and disinfection respectively.

In the preferable embodiment of the invention, the interval between the two adjacent rails of the colubrine guide is smaller than the sampling width of the sampling head, ensuring that the sampling head performs omni-bearing and with a partial overlap scan for the exhaust surface of the exhaust filter when it finishes off its scan in the colubrine guide at a time.

In the preferable embodiment of the invention, an automatically moving device is arranged outside of the exterior scanning guide plate.

In the preferable embodiment of the invention, the automatically moving device comprising two parallel horizontal screw rods arranged on the upper and lower end of the exterior scanning guide plate respectively and a vertical screw rod between and vertical to the two horizontal screw rods; each of the screw rods is provided with a nut in which the nuts of the two horizontal screw rods are coupled with the two ends of the vertical screw rod respectively and the nut of the vertical screw rod is coupled with the exterior magnet on the exterior scanning guide plate. In this case, with the automatically moving device, the scanning device can be controlled to perform scanning automatically to decrease the working intensity of user and the space for the scanning device.

In the preferable embodiment of the invention, the two horizontal screw rods are moving synchronously between them and the vertical screw rod is moving separately.

In the preferable embodiment of the invention, a pressure differential gauge located over the exhaust housing is communicated with the positive pressure cavity, so that the pressure of the positive pressure cavity can be measured at any moment.

In the preferable embodiment of the invention, the exhaust filter and the intake filter are the same type.

The present invention has advantages as follows:
1. The safe exhaust of the invention can guide positive pressure air into that area in which the leakage would happen so as to prevent exterior air from flowing into the exhaust to perform exhausting without leakage.
2. The safe exhaust of the invention has a scanning device to scan the exhaust so as to detect leakage.
3. The safe exhaust of the invention has an automatically moving device to control the scanning process automatically.
4. The safe exhaust of the invention is a close construction so as to scan the exhaust filter omni-bearing and increase the scanning security and veracity, with do not use the fixed point scan manner of prior art.
5. The safe exhaust of the invention also has case provided with a small hole to discharge fog and perform disinfection for the exhaust filter so as to further increase the security of the exhaust.

The abovementioned and other characteristics and advantages of the invention can be best understood through the following detailed description with reference to the drawings.

### Description of figures

Figure 1 shows a structural schematic view of the safe exhaust according to the invention;
Figure 2 shows a structural schematic view of another safe exhaust according to the invention;
Figure 3 shows a front view of the scanning guide plates, magnets, detecting rod and sampling head;
Figure 4 shows a side view of the scanning guide plates, magnets, detecting rod and sampling head.

### Description of reference number

Exhaust housing 1; positive pressure cavity 11; positive pressure connector 12; exhaust filter 2; intake filter 3; exit port 31; intake rubber pipe 32; scanning device 4; interior and exterior scanning guide plates 421, 422; exhaust pipe 411; interior and exterior magnets 431, 432; detecting rod 44; sampling head 45; sampling head soft-tube 46; particle counter 47; colubrine guide 48; automatically moving device 5; horizontal screw rod 51; vertical screw rod 52; nut 53; case 6; small hole 61.

### Mode of carrying out the invention

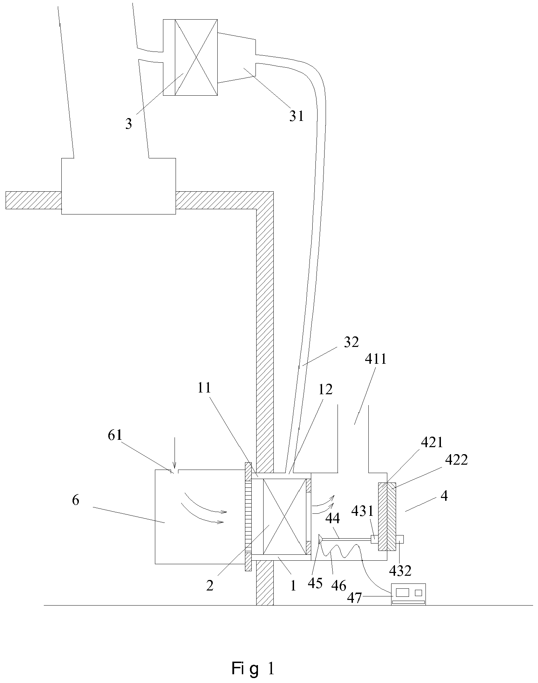

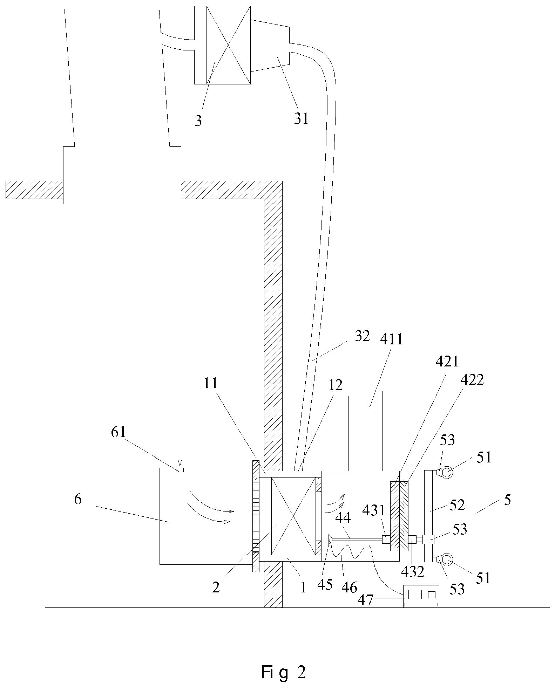

As shown in figure 1 and 2, the safe exhaust according to the present invention is used for biosafety laboratories, negative pressure epidemical rooms, biological product workshop using material of danger factories which cause diseases with ease and correlative devices such as biosafety cabinet. The exhaust assembly can be arranged on the lower of side wall (as shown in figure 1) or the top of the room (i.e. rotating the configuration of figure 1 by 90°). The safe exhaust comprising exhaust housing 1, exhaust filter 2, intake filter 3, and scanning device 4, wherein the exhaust filter 2 is placed inside the exhaust housing 1, and both of the intake surface and outlet surface of the exhaust filter 2 are provided with double-face adhesive sealing tape; which a protecting film can be attached onto the intake surface of the exhaust filter 2 to facilitate taking it down without leakage; a clearance may be formed between the exhaust housing 1 and the exhaust filter 2 during installation, which leads to leakage in general exhaust assembly. The configuration according the invention can solve the question through forming a positive pressure cavity 11 between the exhaust housing 1 and the exhaust filter 2 (described in detail thereinafter). A positive pressure connector 12 is formed on the exhaust housing 1.

In the patent with Chinese patent number 200410086391.X, harmless positive pressure air (not undefiled air) is directly led in the positive pressure cavity and extrudated through the clearance to prevent contaminative air transmitting from outside to inside of the cavity. But in the present invention, it is necessary to scan and detect the exhaust surface of the exhaust filter 2 besides keeping non-leakage. In the case of harmless air but not undefiled air, it cannot effectively detect the leakage of the exhaust surface of the filter, because harmless but not undefiled air is mixed at the exhaust surface of the filter, that is the harmless positive pressure air may be mixed together with the air from the filter, so that it scans the mixed air but not the pure air from the filter which, which leads to fallibility of scanning.

Therefore, now a small type high effective filter (the efficiency thereof is the same as the exhaust filter) may be connected to the soft pipe leading positive pressure air which can be the same undefiled as the air that is sent into the room and, when it is extrudated from the clearance. It's the same cleanliness as the air flow discharged from the exhaust filter. So as not to make a mistake that leakage occurs during scanning the exhaust surface. The intake filter 3 is arranged outside of the intake port of ventilating system, its entry port is communicated with the intake port, and the exit port 31 of the intake filter 3 is connected to the positive pressure connector 12 with a intake rubber pipe 32 so as to communicate with the positive pressure cavity 11, in which the intake filter 3 and the exhaust filter 2 are preferably the same type. Furthermore, a pressure differential gauge which may be located over the exhaust housing 1 is communicated with the positive pressure cavity 11 through the soft tube, so that the pressure of the positive pressure cavity 11 can be measured at any moment so as to make sure that there is no leakage.

The scanning device 4 is arranged on the back wall of the exhaust housing 1 away from the exhaust filter 2 to scan and detect the exhaust filter.

The scanning device 4 compring interior and exterior scanning guide plates 421, 422 located inside and outside of the back wall of the exhaust housing 1 away from the exhaust filter 2 respectively; the exhaust housing 1 is provided with a exhaust pipe 411 for discharging the air from the exhaust filter 2. The interior and exterior scanning guide plates 421, 422 are absorbingly provided with interior and exterior magnets 431, 432 attractive with each other respectively. When the exterior magnet 432 is moved, the interior magnet 431 is followed also , thus it is only required to control the exterior magnet 431 of the exhaust housing 1 to move the interior magnet 431 synchronously. Moreover, a detecting rod 44 arranged on the interior magnet 431 is provided with a sampling element 45 toward the exit port of the exhaust filter 2 at the end thereof opposite the interior magnet 431, and the sampling element 45 located near to the outlet of the exhaust filter (2) and connected to a particle counter (47) outside of the exhaust housing 1 through a sampling tube; thus, when the exterior magnet 432 is operated, the interior magnet 431 is followed also and then the detecting rod 44 and sampling head 45 are moved together to scan the exhaust surface of the exhaust filter 2.

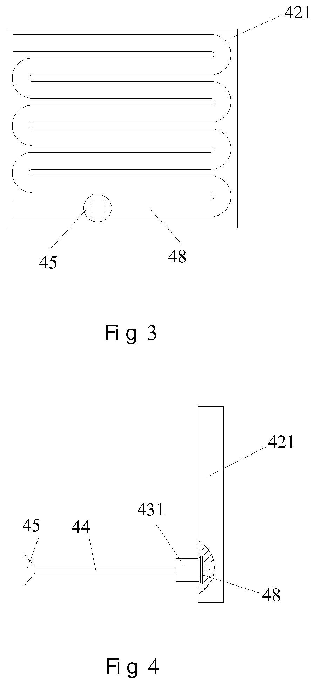

In the above configuration, since the interior and exterior magnets 431, 432 are attractive with each other by magnetic force, so their actions are synchronous, they may dislocate and then fall off from the interior and exterior scanning guide plates 421, 422 respectively, once the user overexerts oneself or there are other reasons. As shown in figure 3 and 4 (figure 3 and 4 show the interior scanning guide plate 421 and interior magnet 431, and the exterior scanning guide plate 422 and exterior magnet 432 are as the same as the former construction, therefore, in order to avoid above said status, according to the present invention, the interior and exterior scanning guide plates 421, 422 are provided with colubrine guide 48 on which the interior and exterior magnets 431, 432 move together; The interior and exterior magnets 431, 432 can be such arranged that they are inserted onto the colubrine guides 48 of the interior and exterior scanning guide plates 421, 422, but can not be taken or fallen off from the colubrine guides 48 optionally. So it is can be ensured that the interior and exterior magnets 431, 432 can not fall off from the interior and exterior scanning guide plates 421, 422.

In order to ensure that scanning the exhaust filter 2 the sampling head 45 supplies is omni-bearing, the shapes on the colubrine guides 48 of the interior and exterior scanning guide plates 421, 422 and the sampling head 45 can be further defined. In the embodiment, the shape of the sampling head 45 is preferable as loudspeaker-shaped to increase the sampling width of the sampling head 45, and the shape of the colubrine guides 48 may be such arranged that the interval between the two adjacent rails of the colubrine guide 48 is smaller than or equal to the sampling width of the sampling head 45, ensuring that the scanning tracks are parallel-conterminous or a partial overlap so that the sampling head scan for the exhaust filter 2 during reciprocating scanning of the sampling head 45.

As shown in figure 2, an automatically moving device 5 is arranged outside of the exterior scanning guide plate 422 to facilitate performing automatically scanning and decrease the space which the scanning device occupies.

The automatically moving device 5 comprising two parallel horizontal screw rods 51 arranged on the upper and lower end of the exterior scanning guide plate 422 respectively and a vertical screw rod 52 between and vertical to the two horizontal screw rods 51. Each of the screw rods 51, 52 is provided with a nut 53 in which the two nuts 53 of the horizontal screw rods 51 are coupled with the two ends of the vertical screw rod 52 respectively and the nut of the vertical screw rod 52 is coupled with the exterior magnet 432 on the exterior scanning guide plate 422. The two horizontal screw rods 51 are moving synchronously between them and the vertical screw rod 52 is moving separately. In this case, the two horizontal screw rods 51 may be driven synchronously by a motor and the vertical screw rod 52 may be driven by another motor separately, and then the moving speed and displacement of the nuts 53 of the horizontal screw rods 51 and the vertical screw rod 52 can be controlled respectively by respectively adjusting the speed of the two motors, so that the movement of the exterior magnet 432 which coupled with the nut 53 of the vertical screw rod 52 can be further controlled to achieve controlling the scanning device to perform scanning automatically.

Furthermore, a case 6 is placed on the end of the exhaust housing 1 opposite the scanning device 4 and provided with a hole 61 for DOP generator discharging fog and formaldehyde generator performing disinfection. The case 6 is fastened on the intake port of the exhaust housing 1, so that the DOP generator can discharge DOP fog for detecting leakage by attaching it to the case 6 through the hole 61, or the formaldehyde generator can perform disinfecting to the intake surface by attaching it to the case 6 through the hole 61.

It should be understood that the foresaid descriptions with the embodiment is only explanatory and unrestrictive. The invention may be modified and amended on many places without separating from the scope of the invention as defined in the appended claims.

## Claims

1. A safe exhaust comprising exhaust housing (1), exhaust filter (2), intake filter (3) and scanning device (4), wherein, the exhaust filter (2) provided with double-face adhesive sealing tape on its intake surface is placed inside the exhaust housing (1); a positive pressure cavity (11) is formed between the exhaust housing (1) and the exhaust filter (2), and a positive pressure connector (12) is formed on the exhaust housing (1); the intake filter (3) is arranged outside of the intake port of ventilating system, the exit port of the intake filter (3) is communicated with the intake port, and the exit port (31) of the intake filter (3) is attached to the positive pressure connector (12) with an intake rubber pipe (32) so as to communicate with the positive pressure cavity (11); and the scanning device (4) is arranged on the back wall of the exhaust housing (1) away from the exhaust filter (2) to scan and detect the outlet of the exhaust filter (2); wherein the scanning device (4) comprises interior and exterior scanning guide plates (421, 422) respectively located inside and outside of the back wall of the exhaust housing (1) away from the exhaust filter (2) and provided with interior and exterior magnets (431, 432)attractive with each other respectively, a detecting rod (44) arranged on the interior magnet (431) provided with a sampling head (45) toward the outlet of the exhaust filter (2) at the end of the rod (44) thereof opposite the interior magnet (431), and wherein the sampling head (45) located near to the outlet of the exhaust filter (2) is connected to a particle counter (47) outside of the exhaust housing (1) through a sampling soft-tube (46).

2. The safe exhaust according to claim 1, **characterized in that** the interior and exterior scanning guide plates (421, 422) is provided with colubrine guide rail (48) on which the interior and exterior magnets (431, 432) move together.

3. The safe exhaust according to any one of claims 1 to 2, **characterized in that** a case (6) is placed on that end of the exhaust housing (1) which is opposite the scanning device (4) and provided with a small hole (61) for DOP generator discharging fog and formaldehyde generator performing disinfection.

4. The safe exhaust according to claim 2, **characterized in that** the interval between the two adjacent rails of the colubrine guide rail (48) is smaller than the sampling width of the sampling element (45).

5. The safe exhaust according to claim 2 or 4, **characterized in that** an automatically moving device (5) is arranged outside of the exterior scanning guide plate (422).

6. The safe exhaust according to claim 5, **characterized in that** the automatically moving device (5) comprising two parallel horizontal screw rods (51) arranged on the upper and lower end of the exterior scanning guide plate (422) respectively and a vertical screw rod (52) between and vertical to the two horizontal screw rods (51); each of the screw rods is provided with a nut (53) in which the nuts (53) of the two horizontal screw rods (51) are coupled with the two ends of the vertical screw rod (52) respectively and the nut (53) of the vertical screw rod (52) is coupled with the exterior magnet (432) on the exterior scanning guide plate (422).

7. The safe exhaust according to claim 6, **characterized in that** the two horizontal screw rods (51) are moving synchronously and the vertical screw rod (52) is moving separately.

8. The safe exhaust according to claim 1, **characterized in that** a pressure differential gauge located over the exhaust housing (1) is communicated with the positive pressure cavity (11).

9. The safe exhaust according to claim 1, **characterized in that** the exhaust filter (2) and the intake filter (3) are the same type.

## Patentansprüche

1. Sichere Abluftvorrichtung mit einem Abluftgehäuse (1), einem Abluftfilter (2), einem Ansaugfilter (3) und einer Abtastvorrichtung (4), wobei der auf seiner Ansaugseite mit doppelseitig klebendem Abdichtband versehene Abluftfilter (2) in dem Abluftgehäuse (1) angeordnet ist; wobei ein Überdruckhohlraum (11) zwischen dem Abluftgehäuse (1) und dem Abluftfilter (2) ausgebildet ist, und ein Überdruckanschluss (12) an dem Abluftgehäuse (1) ausgebildet ist; wobei der Ansaugfilter (3) außerhalb des Ansaugports des Lüftungssystems angeordnet ist, wobei der Aulassport des Ansaugfilters (3) mit dem Ansaugport verbunden ist, und der Auslassport (31) des Ansaugfilters (3) mit dem Überdruckanschluss (12) mittels eines Ansaug-Gummirohres (32) verbunden ist, um mit dem Überdruckhohlraum (11) in Verbindung zu stehen; und wobei die Abtastvorrichtung (4) auf der Rückwand des Abluftgehäuses (1) von dem Abluftfilter (2) entfernt angeordnet ist, um den Auslass des Abluftfilters (2) abzutasten und zu erfassen;
wobei die Abtastvorrichtung (4) aufweist: innere und äußere Abtastführungsplatten (421, 422), die auf der Innen- bzw. der Außenseite der Rückwand des Abluftgehäuses (1) von dem Abluftfilter (2) entfernt angeordnet sind und mit einem inneren und einem äußeren Magneten (431, 432) versehen sind, die sich gegenseitig anziehen, eine an dem inneren Magneten (431) vorgesehene Erfassungsstange (44), die an dem dem inneren Magneten (431) gegenüberliegenden Ende der Stange (44) mit einem in Richtung des Auslasses des Abluftfilters (2) gerichteten Probennahmekopf (45) versehen ist, und wobei der nahe dem Auslass des Abluftfilters (2) befindliche Probennahmekopf (45) mit einem Partikelzähler (47) außerhalb des Abluftgehäuses (1) durch einen weichen Probennahmeschlauch (46) verbunden ist.

2. Sichere Abluftvorrichtung nach Anspruch 1, **dadurch gekennzeichnet, dass** die innere und die äußere Abtastführungsplatte (421, 422) mit einer schlangenförmigen Führungsschiene (48) versehen sind, auf welcher sich der innere und der äußere Magnet (431, 432) zusammen bewegen.

3. Sichere Abluftvorrichtung nach einem der Ansprüche 1 bis 2, **dadurch gekennzeichnet, dass** ein Kasten (6) an dem der Abtastvorrichtung (4) entgegengesetzten Ende des Abluftgehäuses (1) angeordnet ist und mit einem kleinen Loch (61) für einen DOP-Generator, der Nebel ausgibt, und einen Formaldehyd-Generator versehen ist, der eine Desinfizierung durchführt.

4. Sichere Abluftvorrichtung nach Anspruch 2, **dadurch gekennzeichnet, dass** der Abstand zwischen den beiden benachbarten Schienen der schlangenförmigen Führungsschiene (48) kleiner als die Probennahmeweite des Probennahmeelements (45) ist.

5. Sichere Abluftvorrichtung nach Anspruch 2 oder 4, **dadurch gekennzeichnet, dass** eine sich automatisch bewegende Vorrichtung (5) außerhalb der äußeren Abtastführungsplatte (422) angeordnet ist.

6. Sichere Abluftvorrichtung nach Anspruch 5, **dadurch gekennzeichnet, dass** die sich automatisch bewegende Vorrichtung (5) zwei parallele horizontale Schraubenstangen (51), die am oberen bzw. am unteren Ende der äußeren Abtastführungsplatte (422) angeordnet sind, und eine vertikale Schraubenstange (52) aufweist, die sich zwischen und vertikal zu den beiden horizontalen Schraubenstangen (51) erstreckt; wobei jede der Schraubenstangen mit einer Mutter (53) versehen ist, wobei die Muttern (53) der beiden horizontalen Schraubenstangen (51) jeweils mit den beiden Enden der vertikalen Schraubenstange (52) verbunden sind, und die Mutter (53) der vertikalen Schraubenstange (52) mit dem äußeren Magneten (432) auf der äußeren Abtastführungsplatte (422) gekoppelt ist.

7. Sichere Abluftvorrichtung nach Anspruch 6, **dadurch gekennzeichnet, dass** die beiden horizontalen Schraubenstangen (51) sich synchron bewegen und die vertikale Schraubenstange (52) sich separat bewegt.

8. Sichere Abluftvorrichtung nach Anspruch 1, **dadurch gekennzeichnet, dass** ein über dem Abluftgehäuse (1) angeordnetes Differenzdruckmessgerät mit dem Überdruckhohlraum (11) in Verbindung steht.

9. Sichere Abluftvorrichtung nach Anspruch 1, **dadurch gekennzeichnet, dass** der Abluftfilter (2) und der Ansaugfilter (3) vom selben Typ sind.

## Revendications

1. Sortie de ventilation sécurisée comprenant un boîtier de sortie de ventilation (1), un filtre de sortie de ventilation (2), un filtre d'admission (3) et un dispositif de balayage (4), dans laquelle le filtre de sortie de ventilation (2) pourvu d'un ruban d'étanchéité adhésif double face sur sa surface d'admission est placé à l'intérieur du boîtier de sortie de ventilation (1); une cavité à pression positive (11) est formée entre le boîtier de sortie de ventilation (1) et le filtre de sortie de ventilation (2), et un connecteur à pression positive (12) est formé sur le boîtier de sortie de ventilation (1); le filtre d'admission (3) est disposé à l'extérieur de l'orifice d'admission du système de ventilation, l'orifice de sortie du filtre d'admission (3) est en communication avec l'orifice d'admission, et l'orifice de sortie (31) du filtre d'admission (3) est fixé au connecteur à pression positive (12) par un tuyau en caoutchouc d'admission (32) de manière à communiquer avec la cavité à pression positive (11); et le dispositif de balayage (4) est disposé sur la paroi arrière du boîtier de sortie de ventilation (1) éloigné du filtre de sortie de ventilation (2) pour balayer et détecter la sortie du filtre d'échappement (2);
dans lequel le dispositif de balayage (4) comprend des plaques de guidage de balayage intérieure et extérieure (421, 422) situées respectivement à l'intérieur et à l'extérieur de la paroi arrière du boîtier de sortie de ventilation (1) éloignées du filtre de sortie de ventilation (2) et pourvues d'aimants intérieur et extérieur (431, 432) qui s'attirent respectivement entre eux, une tige de détection (44) disposée sur l'aimant intérieur (431) munie d'une tête d'échantillonnage (45) en direction de la sortie du filtre de sortie de ventilation (2) à l'extrémité de la tige (44) opposée à l'aimant intérieur (431), et dans lequel la tête d'échantillonnage (45) située près de la sortie du filtre de sortie de ventilation (2) est connectée à un compteur de particules (47) à l'extérieur du boîtier de sortie de ventilation (1) par l'intermédiaire d'un tube souple d'échantillonnage (46).

2. Sortie de ventilation sécurisée selon la revendication 1, **caractérisée par le fait que** les plaques de guidage de balayage intérieure et extérieure (421, 422) sont munies d'un rail de guidage en colubrine (48) sur lequel se déplacent ensemble les aimants intérieur et extérieur (431, 432).

3. Sortie de ventilation sécurisée selon l'une quelconque des revendications 1 à 2, **caractérisée par le fait qu'**une caisse (6) est placée sur l'extrémité du boîtier de sortie de ventilation (1) opposée au dispositif de balayage (4) et munie d'un petit trou (61) pour que le générateur de DOP évacue le brouillard et que le générateur de formaldéhyde effectue la désinfection.

4. Sortie de ventilation sécurisée selon la revendication 2, **caractérisée par le fait que** l'intervalle entre les deux rails adjacents du rail de guidage de colubrine (48) est inférieur à la largeur d'échantillonnage de l'élément d'échantillonnage (45).

5. Sortie de ventilation sécurisée selon la revendication 2 ou 4, **caractérisée par le fait qu'**un dispositif à déplacement automatique (5) est disposé à l'extérieur de la plaque de guidage de balayage extérieure (422).

6. Sortie de ventilation sécurisée selon la revendication 5, **caractérisée par le fait que** le dispositif à déplacement automatique (5) comprend deux tiges de vis horizontales parallèles (51) disposées respectivement sur les extrémités supérieure et inférieure de la plaque de guidage de balayage extérieure (422) et une tige de vis verticale (52) entre les, et verticale par rapport aux, deux tiges de vis horizontales (51); chacune des tiges de vis est munie d'un écrou (53) où les écrous (53) des deux tiges de vis horizontales (51) sont couplés respectivement aux deux extrémités de la tige de vis verticale (52) et l'écrou (53) de la tige de vis verticale (52) est couplée à l'aimant extérieur (432) sur la plaque de guidage de balayage extérieure (422).

7. Sortie de ventilation sécurisée selon la revendication 6, **caractérisée par le fait que** les deux tiges de vis horizontales (51) se déplacent de manière synchrone et que la tige de vis verticale (52) se déplace séparément.

8. Sortie de ventilation sécurisée selon la revendication 1, **caractérisée par le fait qu'**un manomètre différentiel situé sur le carter de sortie de ventilation (1) est en communication avec la cavité à pression positive (11).

9. Sortie de ventilation sécurisée selon la revendication 1, **caractérisée par le fait que** le filtre de sortie de ventilation (2) et le filtre d'admission (3) sont du même type.
